# EUROPEAN PATENT SPECIFICATION

(11) **EP 2 488 265 B1**
(45) Date of publication and mention of the grant of the patent: **15.08.2018**
(21) Application number: 10714841.3
(22) Date of filing: 19.01.2010
(51) Int. Cl.: A63G 31/00, B64D 23/00

(54) **FREE FALL SIMULATOR**
FREIFALLSIMULATOR
SIMULATEUR DE CHUTE LIBRE

(30) Priority: 12.10.2009 CZ 200921805 U
(43) Date of publication of application: 22.08.2012
(73) Proprietor: Strojirna Litvinov Spol. S.r.o, 436 01 Litvinov (CZ)
(72) Inventor: MRAZ, Vojtech, 290 01 Sokolec (CZ)
(74) Representative: Cabinet Plasseraud
(86) International application number: PCT/CZ2010/000003
(87) International publication number: WO 2011/044860

(56) References cited:
- JP-A- 10 156 047
- US-A- 3 484 953
- US-A- 6 083 110
- US-A1- 2004 115 593
- US-A1- 2006 025 227

## Description

### TECHNICAL FIELDS

The invention relates to a free fall simulator creating the conditions equaling the environmental conditions and air stream around the person present in the "flight chamber" in the same way as during a free fall.

### BACKGROUND ARTS

Until now, there have been produced wind tunnels, both in a design which is open, energetically more demanding than the enclosed design and not enabling the all-year operation and designs which are enclosed but the position of fans in the wind tunnel upper horizontal part or the cooling by air exchange with the ambient atmosphere, presuppose high energetic demands, frequent pressure and thermal losses, great weight of the whole equipment and excessive vibrations. With the also known application of fans in a vertical position the tunnels are however equipped with the single return branch in which all the fans are installed at once, which results in most deficiencies as those of the former technical designs. These basic concepts are included e.g. within US5209702, US5655909, US5753811, US6083110, US6805558, US2006021428(A1), A63G31/00, B64D23/00, G09B9/00, nevertheless, all of them contain more or less most of the basic deficiencies distinguished, especially, by high energetic demands of the whole equipment, high construction height, pressure losses in the wind tunnel and excessive noise of the whole equipment. Last but not least, a great drawback is the necessity of a robust construction, as the equipment center of gravity is located in the upper third of the equipment. Document US-A1-2006/0025227 discloses a free fall simulator comprising: a flight chamber provided with an air supply from fans, and a wind tunnel system extending from the upper part of the flight chamber and having two separate branches for guiding an airflow; the wind tunnel system further comprising: a distributor positioned above the flight chamber, bending vanes connecting the two separate branches of the wind tunnel system below the flight chamber, a nozzle positioned below the flight chamber between the bending vanes and the flight chamber, wherein the static pressure in the flight chamber is near to the atmospheric pressure, wherein the airflow is divided into the separate branches of the wind tunnel system by the distributor, such that said airflow is again joined in the bending vanes, so as to rectify the airflow to the nozzle, and the airflow entering the nozzle thereby travels back to the flight chamber, and the wind tunnel system of the free fall simulator further includes a cooling system.

### DISCLOSURE OF INVENTION

The above mentioned deficiencies are eliminated using a free fall simulator according to claim 1. In particular, the free fall simulator is formed by the central flight chamber provided with the air supply from fans, in accordance with this invention, the substance of which consists in that the fans driving air into the flight chamber are installed in a vertical position, in separate branches located in parallel with the flight chamber. These separate branches with fans are split in the wind tunnel system already in its upper horizontal section after the flight chamber. This splitting allows also a better forming of the airflow in tunnel ducts and corners before entering to the fans due to its angular rotation. The free fall simulator is moreover equipped with the system of internal diffusers and the cooling, designed by means of the internal system with heat exchanger and auxiliary fans minimizing pressure losses in the wind tunnel, thus reducing the required input of the entire tunnel drive.

A higher efficiency when compared with the existing technical designs has been achieved also by optimization of the shape of the whole wind tunnel, thanks to which the static pressure in the flight chamber is near to the atmospheric pressure, which is more natural and causes, namely, a lower stress affecting the flight chamber walls from excess pressure. In view of the fan installation in a vertical position in separate branches the system in question is capable of achieving an overall lighter construction of the whole equipment and a reduction of vibrations arising during the operation.

The free fall simulator according to this invention has the greatest advantage in that the fans are installed in a vertical position in separate branches, which are split already in the wind tunnel upper horizontal part, the cooling system minimizes pressure losses in the wind tunnel and thus reduces the required input of the tunnel drive and increases efficiency of the whole equipment. Thanks to that a lower construction height and a lower noise of the whole equipment has been achieved. Static pressure in the flight chamber is near to the atmospheric pressure, which results in a lower stress affecting the flight chamber walls from excess pressure.

### BRIEF DESCRIPTION OF DRAWINGS

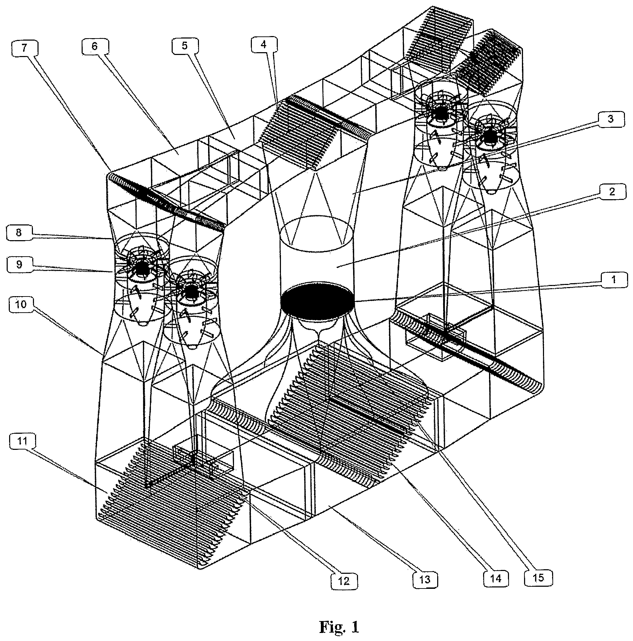

The invention will be clarified more in detail by means of Fig. 1, showing the free fall simulator as a whole assembly.

### MADE FOR CARRYING OUT THE INVENTION

The free fall simulator consists of the flight chamber 2, under which the net 1 of the flight chamber is installed. Air from four fans 9 passes through the flight chamber 2 from the bottom upward and enters via the distributor 4 with bending vanes, which separates the airflow to the right side and the left side, each of which is farther divided into individual ducts with separate fans 9, while changing at the same time the airflow direction from the vertical one to the horizontal one. After the distributor 4 the air flow passes via the diffuser 5, dividing a part of the wind tunnel into separate ducts with fans, while reaching the four, fully independent ducts with fans 9. Diffuser 6 of the wind tunnel duct rectifies the air flow to the bending corner 7 with vanes. In the bending corner 7 with vanes the air flow changes its position from the horizontal one to the vertical one downward and passes via the transition 8 to the fan 9. In each of the separate ducts the diffuser 10 of the fan, which rectifies the air flow to the bending vanes 11 installed in the concrete vat 13 forming the wind tunnel lower part, is located after the fan 9. In the bending vanes 11 the movement from the vertical one to the horizontal one takes place and the cooling system 12 with heat exchanger and auxiliary fans is installed at the outlet, thanks to which the pressure losses in the wind tunnel are minimized and the input of the tunnel drive is thus reduced. The entire horizontal part is located in the concrete vat 13, forming the wind tunnel lower section. Air divided in the distributor 4 is again joined in the bending vanes 14 which connect the wind tunnel right and left sides and rectify the airflow to the nozzle 15. At the end of the whole cycle the air flow enters the nozzle 15 and back via the net 1 to the flight chamber 2.

### APPLICABILITY OF THE INVENTION

The invention may be utilized both for the sporting simulation of free fall by the wide public and for the simulation of flight and behavior of various objects during their flight.

### Key:

- 1: net on the flight chamber floor
- 2: flight chamber
- 3: diffuser after the flight chamber
- 4: distributor
- 5: diffuser dividing into separate ducts with fans
- 6: diffuser of the wind tunnel duct
- 7: bending corner with vanes
- 8: transition to the fan
- 9: fan
- 10: diffuser of the fan
- 11: bending vanes in concrete vat, forming the wind tunnel lower section
- 12: cooling system with heat exchanger and auxiliary fans
- 13: concrete vat forming the wind tunnel lower section
- 14: bending vanes joining two ducts of the wind tunnel and rectifying the air flow to the nozzle
- 15: nozzle

## Claims

1. A free fall simulator comprising:
a flight chamber (2) provided with an air supply from fans (9), and
a wind tunnel system extending from the upper part of the flight chamber (2) and having two separate branches for guiding an airflow, each of said branches of the wind tunnel system being divided into separate ducts; the wind tunnel system further comprising:
a distributor (4) positioned above the flight chamber (2),
bending vanes (14) connecting the two separate branches of the wind tunnel system below the flight chamber (2), and
a nozzle (15) positioned below the flight chamber (2) between the bending vanes (14) and the flight chamber (2);
wherein the fans (9) are installed in a vertical position in separate ducts of the wind tunnel system, located in parallel with the flight chamber (2), wherein the static pressure in the flight chamber (2) is near to the atmospheric pressure,
wherein the separate ducts with fans (9) are split in the wind tunnel system in its upper horizontal section after the flight chamber (2),
wherein the airflow is divided into the separate branches of the wind tunnel system by the distributor (4), such that said airflow is again joined in the bending vanes (14), so as to rectify the airflow to the nozzle (15), and the airflow entering the nozzle (15) thereby travels back to the flight chamber (2),
and wherein the wind tunnel system of the free fall simulator further includes a cooling system (12) with a heat exchanger and auxiliary fans, wherein cooling system (12) is installed at the outlet of each of the two separate branches of the wind tunnel system.

2. The free fall simulator according to claim 1, wherein the wind tunnel system further comprises a system of internal diffusers (3, 6, 10).

## Patentansprüche

1. Ein Freifallsimulator der beinhaltet:
eine Flugkammer (2), die einen Luftzufuhr aus Gebläsen (9) aufweist, und
ein Windkanalsystem, das sich vom oberen Teil der Flugkammer (2) erstreckt, mit zwei separaten Zweigen zur Führung des Luftstroms, jeder der Zweige in zwei separate Schächte aufgeteilt ist, das Windkanalsystem zusätzlich beinhaltend:
ein Distributor (4), positioniert über der Flugkammer (2),
Biegeschaufeln (14), die die separaten Zweige des Windkanalsystems unter der Flugkammer (2) verbinden, und
eine Düse (15), positioniert unter der Flugkammer (2), zwischen den Biegeschaufeln (14) und der Flugkammer (2),
wobei die Gebläse (9) in einer senkrechten Lage in den separaten Schächten des Windkanalsystems angebracht sind, parallel mit der Flugkammer (2),
wobei sich der statische Druck in der Flugkammer (2) dem atmosphärischen Druck nähert,
wobei die einzelnen Schächte mit den Gebläsen (9) im Windkanalsystem in seinem oberen, horizontalen Teil, hinter der Flugkammer gespalten sind
wobei der Luftstrom in die separaten Zweige des Windkanalsystems durch den Distributor (4) aufgeteilt wird, sodass der Luftstrom durch die Biegeschaufeln (14) wieder zusammengeführt wird, damit der Luftstrom an der Düse (15) wieder gerade ausgerichtet ist, und der in die Düse eintretend Luftstrom somit zurück in die Flugkammer (2) fließt,
und wobei das Windkanalsystem des Freifallsimulators weiter ein Kühlsystem (12) mit einem Wärmeaustauscher und Hilfsgebläsen beinhaltet, wobei das Kühlsystem (12) jeweils am Ausgang beider einzelnen Zweige des Windkanalsystems angebracht ist.

2. Der Freifallsimulator nach Anspruch 1, wobei das Windkanalsystem zusätzlich ein System interner Diffusoren (3, 6,0) aufweist.

## Revendications

1. Simulateur de chute libre comprenant :
une chambre de vol (2) comportant une alimentation en air par provenant de ventilateurs (9), et
un système de soufflerie aérodynamique qui s'étend à partir de la partie supérieure de la chambre de vol (2) et comprenant deux branches séparées pour guider un flux d'air, chacune desdites branches du système de soufflerie aérodynamique étant divisée en deux canaux séparés, le système de soufflerie aérodynamique comprenant en outre :
un distributeur (4), disposé au-dessus de la chambre de vol (2),
des aubes de déviation (14) reliant les branches séparées du système aérodynamique au-dessous de la chambre de vol (2), et
un étranglement (15), disposé au-dessous de la chambre de vol (2), entre les aubes de déviation (14) et la chambre de vol (2),
les ventilateurs (9) étant disposés en position verticale dans les canaux séparés du système de soufflerie aérodynamique, en parallèle de la chambre de vol (2),
la pression statique dans la chambre de vol (2) étant voisine de la pression atmosphérique,
les canaux séparés avec les ventilateurs (9) étant divisés dans le système de soufflerie aérodynamique dans sa partie supérieure horizontale après la chambre de vol (2),
le courant d'air étant distribué vers les branches séparées du système de soufflerie aérodynamique par le distributeur (4) de façon que ce courant d'air est conduit par l'intermédiaire des aubes de déviation (14) à se réunir de façon que le courant d'air soit aligné à nouveau dans l'étranglement (15) et que le courant d'air entrant dans l'étranglement (15) revienne ainsi dans la chambre de vol (2),
et le système de soufflerie aérodynamique du simulateur de chute libre comprenant en outre un système de refroidissement (12) muni d'un échangeur de chaleur et des ventilateurs auxiliaires, le système de refroidissement (12) étant disposé sur les sorties des deux branches séparées du système de soufflerie aérodynamique.

2. Simulateur de chute libre selon la revendication 1, où le système de soufflerie aérodynamique comprend en outre un système de diffuseurs internes (3, 6, 10).
